# FASCICULE DE BREVET EUROPEEN

(11) **EP 0 574 636 B1**
(45) Date de publication et mention de la délivrance du brevet: **21.08.1996**
(21) Numéro de dépôt: 92401717.1
(22) Date de dépôt: 19.06.1992
(51) Int. Cl.: G05B 19/042

(54) **Procédés pour adresser une unité fonctionnelle et pour mettre en correspondance deux unités fonctionnelles ; unité fonctionnelle et installation s'y rapportant**
Verfahren zur Adressierung einer Betriebseinrichtung und zur Verbindung von zwei Betriebseinrichtungen; Betriebseinrichtung und Anlage dafür
Methods for addressing an operation unit and for connecting two operation units with each other; operation unit and installation therefor

(43) Date de publication de la demande: 22.12.1993
(73) Titulaire: EURO CP s.a.r.l., F-94045 Créteil Cédex (FR)
(72) Inventeur: Gilbert, Jérôme, F-92300 Levallois Perret (FR)
(74) Mandataire: Pontet, Bernard

(56) Documents cités:
- EP-A- 0 466 151
- WO-A-91/14213
- FR-A- 2 337 478
- FR-A- 2 670 590
- US-A- 4 910 658

## Description

La présente invention concerne un procédé pour installer une unité fonctionnelle reliée à d'autres unités fonctionnelles à travers un espace de communication bidirectionnelle d'un local.

La présente invention concerne l'attribution d'une adresse à l'unité fonctionnelle ainsi qu'éventuellement la mise en correspondance de deux telles unités fonctionnelles à travers l'espace de communication.

La présente invention concerne également une unité fonctionnelle et une installation pour la mise en oeuvre de ces procédés.

L'invention s'applique aux installations domestiques et aux installations en locaux professionnels.

Dans de telles installations, on sait organiser les unités fonctionnelles en les reliant entre elles par un espace de communication de manière à permettre à l'utilisateur un pilotage plus perfectionné, plus automatique ou plus commode.

L'invention est mise en oeuvre avec des unités fonctionnelles, par exemple des appareils ou des fonctions d'appareils, qui ont la possibilité de communiquer de manière bidirectionnelle. Le ou les supports de transmission utilisés pour réaliser l'espace de communication bidirectionnelle peuvent être les courants porteurs, un câble, des moyens optiques ou radio électriques, etc ... Les unités fonctionnelles peuvent être non seulement des appareils, mais aussi des fonctions ou ressources d'appareil, ou encore un organe assurant une fonction de relais vers un appareil éloigné du local.

La structure de réseau la mieux adaptée pour mettre en oeuvre ce procédé est une structure multimaître multi-esclave avec échange possible des rôles. Le mode d'accès au support de transmission sera avantageusement du type à accès multiple avec écoute préalable du support et gestion des collisions.

Ce type d'installations comporte des phases opératoires où des adresses doivent être attribuées aux unités fonctionnelles. C'est par exemple le cas lorsque l'opérateur configure l'installation : il doit alors désigner les unités fonctionnelles devant correspondre entre elles, c'est à dire par exemple indiquer, afin que cela soit mis en mémoire, quelle unité fonctionnelle d'action devra réagir à une commande donnée, provenant d'une unité de commande, par exemple d'un programmateur horaire ou d'un boîtier de commande muni de boutons manuels.

On connaît les procédés manuels d'adressage, qui nécessitent généralement des compétences particulières et une tournure d'esprit technicienne.

On connaît également, d'après le EP-A-0 466 151 et d'après le WO-A-91 14 213 des procédés dans lesquels une unité centrale gère l'organisation du réseau et en particulier les attributions d'adresse. Une telle unité centrale constitue un appareil supplémentaire complexe.

Le but de l'invention est de proposer un procédé d'installation pouvant être très automatisé sans nécessiter le recours à une unité centrale.

Suivant l'invention, le procédé d'installation comprenant une séquence d'adressage d'une unité fonctionnelle dans un espace de communication bidirectionnelle reliant plusieurs telles unités fonctionnelles entre elles, est caractérisé par les étapes suivantes, dans le cadre de ladite séquence d'adressage :
a) émission dans l'espace de communication, par l'unité fonctionnelle, d'un message d'interrogation muni d'une première adresse choisie dans un champ d'adresses possibles ;
b) attente par l'unité fonctionnelle d'une réponse à ce message d'interrogation, en provenance de l'espace de communication ;
c) adoption de la première adresse par l'unité fonctionnelle en l'absence de réponse au message d'interrogation ;
d) en présence d'une réponse au message d'interrogation, réitération des étapes "a)" et "b)" par l'unité fonctionnelle en changeant l'adresse associée au message d'interrogation jusqu'à ce qu'un n^{ième} message d'interrogation, muni d'une n^{ième} adresse, reste sans réponse ;
e) adoption de la n^{ième} adresse par l'unité fonctionnelle.

L'unité fonctionnelle explore systématiquement un champ d'adresses possibles. Pour chaque adresse elle pose une question en la destinant à toute unité fonctionnelle qui aurait déjà l'adresse explorée. S'il n'y a pas de réponse, c'est que l'adresse explorée est disponible et l'unité fonctionnelle adopte cette adresse. Si au contraire il y a une réponse, c'est que l'adresse explorée est déjà affectée à une autre unité fonctionnelle, et l'unité fonctionnelle en cours d'adressage repose sa question en lui associant une nouvelle adresse qui se trouve ainsi explorée à son tour. Et ainsi de suite jusqu'à ce qu'une adresse disponible soit détectée par absence de réponse à la question posée à cette adresse.

Ce procédé est facile à automatiser complètement, au point que l'opérateur peut ignorer totalement l'adresse retenue et le nombre d'adresses explorées sans succès avant qu'une adresse puisse être retenue. Il suffit à l'opérateur de déclencher le processus de recherche d'adresse en actionnant une commande de manière appropriée, à moins que ce déclenchement ne soit lui-même automatique, si le procédé d'adressage s'inscrit dans un processus plus vaste.

Avantageusement, un tel processus plus vaste peut consister en un procédé de mise en correspondance d'unités fonctionnelles reliées entre elles par un espace de communication bidirectionnelle, caractérisé par les étapes suivantes:
- désignation d'une unité fonctionnelle de commande et d'une unité fonctionnelle d'action par un opérateur,
- adressage automatique de l'unité d'action par la séquence d'adressage précitée,
- émission par l'unité d'action, d'un message incluant l'adresse de l'unité d'action,
- enregistrement de l'adresse de l'une des unités dans une mémoire non-volatile de l'autre unité.

Ce procédé permet de mettre en correspondance une unité de commande avec une unité d'action de façon que l'unité d'action puisse par la suite être commandée au moyen de l'unité de commande.

Il est possible de l'automatiser au point que seule son étape de désignation des deux unités nécessite l'intervention d'un opérateur.

Selon un deuxième aspect de l'invention, l'unité fonctionnelle comprenant un micro-contrôleur auquel sont reliés des moyens d'entrée/sortie et un moyen de transmission bidirectionnelle pour relier le micro-contrôleur à un espace de communication bidirectionnelle, est caractérisée en ce que le micro-contrôleur est programmé de manière à contenir au moins une séquence d'adressage automatique ayant les étapes suivantes :
a) émission dans l'espace de communication, par l'unité fonctionnelle, d'un message d'interrogation muni d'une première adresse choisie dans un champ d'adresses possibles ;
b) attente par l'unité fonctionnelle d'une réponse à ce message d'interrogation, en provenance de l'espace de communication ;
c) adoption de la première adresse par l'unité fonctionnelle en l'absence de réponse au message d'interrogation ;
d) en présence d'une réponse au message d'interrogation, réitération des étapes "a)" et "b)" par l'unité fonctionnelle en changeant l'adresse associée au message d'interrogation jusqu'à ce qu'un n^{ième} message d'interrogation, muni d'une n^{ième} adresse, reste sans réponse ;
e) adoption de la n^{ième} adresse par l'unité fonctionnelle.

Selon un troisième aspect, l'invention englobe aussi une installation constituée de telles unités fonctionnelles reliées entre elles par un espace de communication bidirectionnelle.

D'autres particularités et avantages de l'invention ressortiront encore de la description ci-après, relative à des exemples non limitatifs.

Aux dessins annexés :
- la figure 1 est une vue schématique d'une installation selon l'invention ;
- la figure 2 est un schéma-bloc d'un appareil de commande ;
- la figure 3 est un schéma-bloc d'un appareil d'action ;
- la figure 4 est un organigramme de mise en correspondance, selon lequel est programmé le micro-contrôleur de l'appareil de commande ;
- la figure 5 est un organigramme du sous-programme de recherche d'adresse de réseau ;
- la figure 6 est un organigramme du sous-programme de recherche d'adresse d'unité ;
- la figure 7 est un organigramme du sous-programme de traitement d'une demande de propositions de chaînage ; et
- la figure 8 est un organigramme de mise en correspondance selon lequel est programmé le micro-contrôleur d'un appareil d'action.

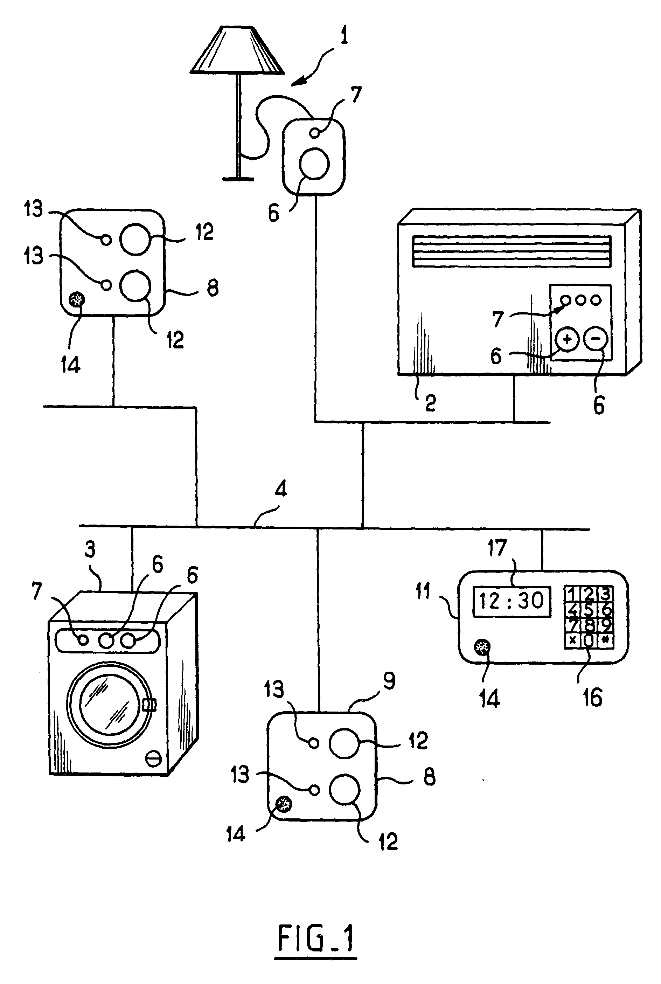

Dans l'exemple représenté à la figure 1, l'installation, volontairement simplifiée, comprend divers appareils d'action, à savoir un lampadaire 1, un convecteur de chauffage 2, et une machine à laver 3 qui sont reliés les uns aux autres par un espace de communication bidirectionnelle 4 à travers lequel ils peuvent échanger des messages d'état provenant des appareils d'action 1 à 3 et des messages de commande destinés aux appareils d'action 1 à 3. Les appareils d'action 1 à 3 comprennent un ou plusieurs boutons de réglage 6 offrant au minimum deux états de fonctionnement, par exemple "marche" et "arrêt", et un ou plusieurs voyants lumineux ou autres indicateurs 7.

L'espace 4 peut-être constitué par le réseau d'alimentation électrique, auquel cas les messages sont élaborés de manière concrète selon la technique des courants porteurs. L'espace 4 peut également être constitué par un espace perméable aux ondes radio ou aux signaux infra-rouges, ou par un moyen filaire.

Trois appareils de commande 8, 9, 11 sont également reliés à l'espace 4 pour recevoir les messages d'état de la part des appareils d'action 1 à 3, et leur adresser des messages de commande et des messages de demande d'état.

Les appareils de commande 8 et 9 sont du type manuel. Ils comprennent deux boutons de télécommande 12 à chacun desquels est associé un voyant de signalisation 13. Ils comprennent aussi une commande manuelle de demande de mise en correspondance 14.

L'appareil de commande 11 est un programmateur horaire comprenant un clavier de programmation 16, un bouton de demande de mise en correspondance 14 et une horloge 17.

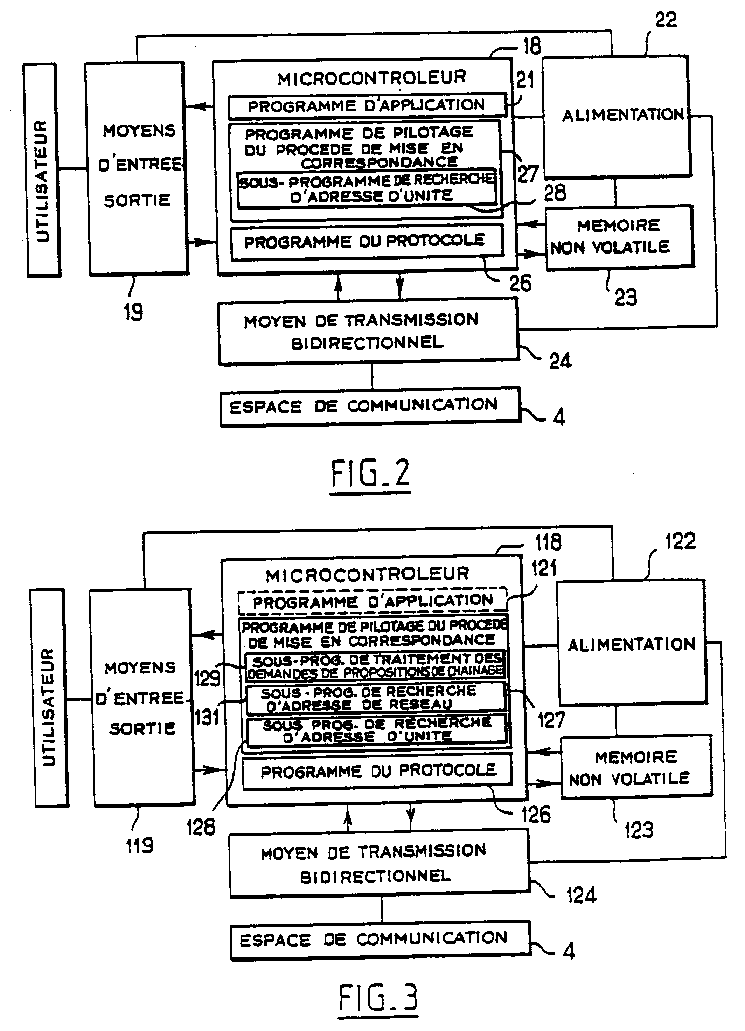

Comme représenté à la figure 2, chaque appareil d'action comporte un micro-contrôleur 18 relié à des moyens d'entrée/sortie 19 qui font l'interface avec l'utilisateur. En pratique, ces moyens d'entrée/sortie sont constitués par les boutons 6 et voyants lumineux 7 de l'appareil, et aussi par les actionneurs de l'appareil d'action, qui fournissent à l'utilisateur l'action attendue, par exemple éclairage, chauffage etc.

En fonction des commandes effectuées sur les boutons 6, et le cas échéant des signaux reçus de capteurs, un programme d'application 21 prévu dans le micro-contrôleur gère l'action des voyants lumineux 7 et des actionneurs (lampes, moteurs, résistances chauffantes, relais etc) faisant partie des moyens d'entrée/sortie. Le micro-contrôleur 18 est en outre relié à une alimentation 22 et à une mémoire non-volatile 23. Le micro-contrôleur 18 est aussi relié à l'espace 4 par l'intermédiaire d'un moyen de transmission bidirectionnelle 24, par exemple un modem capable de transformer en message du type courants porteurs les informations reçues du micro-contrôleur 18, et inversement de transformer en signaux acceptables par le micro-contrôleur 18 les messages du type courants porteurs provenant de l'espace 4.

Le micro-contrôleur 18 renferme encore un programme de pilotage du procédé de mise en correspondance 27, comprenant un sous-programme de recherche d'adresse d'unité 28.

Il est aussi prévu dans le micro-contrôleur 18 un programme de protocole 26 qui gère les échanges d'informations entre le moyen de transmission bidirectionnelle, les moyens d'entrée/sortie et la mémoire non-volatile.

Comme le montre la figure 3 le schéma-bloc des appareils de commande 8, 9, 11 ne diffère de celui des appareils d'action 1 à 3 qu'en ce que dans le micro-contrôleur 118 le programme d'application 121 n'est plus qu'optionnel tandis que le programme de gestion de procédé 127 comporte, en plus du sous-programme de recherche d'adresse d'unité, un sous-programme de traitement des demandes de propositions de chaînage 129 et un sous-programme de recherche d'adresse de réseau 131.

Par ailleurs, le schéma est identique à celui de la figure 2, les références numériques des éléments correspondants étant augmentées de 100.

Le programme d'application 121 peut n'être prévu que dans certains types d'appareils de commande, par exemple le programmateur horaire 11 pour son fonctionnement automatique propre.

Les moyens d'entrée/sortie 119 des appareils de commande comprennent les boutons de télécommande 12, le ou les boutons de demande de mise en correspondance 14 et les voyants lumineux 13.

Le procédé de mise en correspondance selon l'invention débute par une action de l'utilisateur sur le bouton de mise en correspondance 14 d'un appareil de commande, par exemple l'appareil de commande 8 de la figure 1. Sur tous les appareils de commande 8, 9, 11, ce bouton a la même couleur, par exemple bleu, quel que soit l'appareil et quel que soit le fabricant pour que l'utilisateur puisse l'identifier facilement. De plus, il est caché en usage normal ou suffisamment difficile d'accès pour éviter les manipulations involontaires. L'opérateur actionne le bouton de demande de mise en correspondance 14 de l'appareil de commande 8 sur lequel se trouve la commande 12 que l'utilisateur souhaite mettre en correspondance avec un appareil d'action 1 à3.

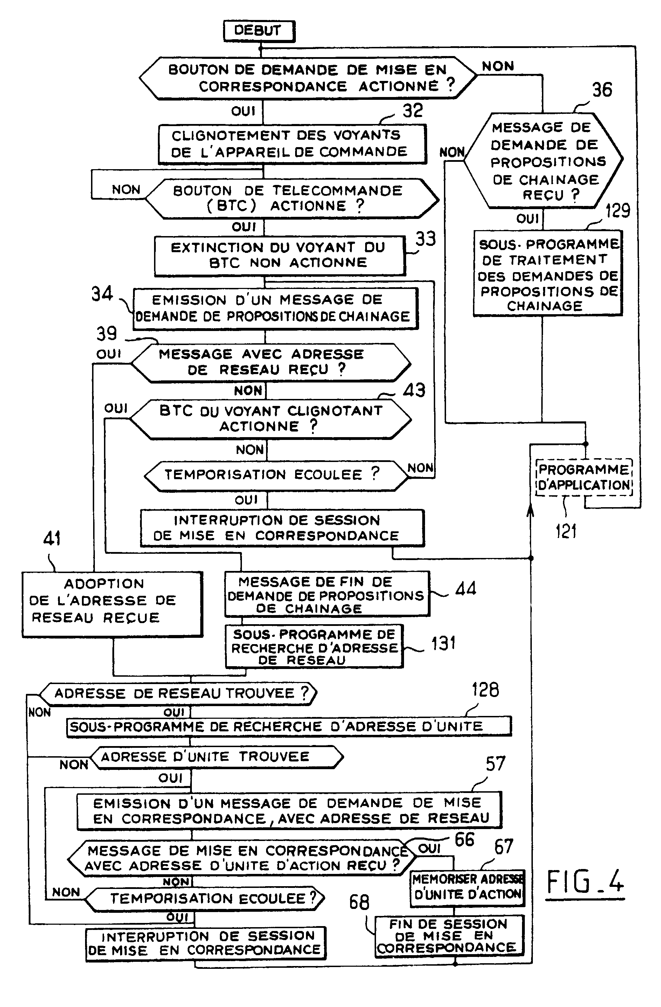

La figure 4 montre l'organigramme du procédé de mise en correspondance tel que programmé dans l'appareil de commande 8.

L'appui sur le bouton de demande de mise en correspondance provoque le clignotement des voyants locaux 13 affectés aux différents boutons de télécommande (BTC) 12 de l'appareil de commande (étape 32).

Le clignotement de tous les voyants de l'appareil de commande est destiné à inciter l'utilisateur à désigner le bouton de télécommande à mettre en correspondance avec un appareil d'action. Lorsque l'utilisateur a choisi l'un des boutons de télécommande 12, le voyant 13 lié au BTC 12 non retenu s'éteint (étape 33) et il y a émission d'un message de demande de propositions de chaînage (étape 34).

A ce stade en effet, le bouton de télécommande 12 actionné n'a pas encore d'adresse et on va dans la suite du procédé lui attribuer deux adresses, à savoir d'une part une adresse de réseau qui sera commune à l'unité fonctionnelle concrétisée par le bouton de télécommande 12 et le voyant 13 associé, et à toutes les unités fonctionnelles, de commande ou d'action, avec lesquelles le bouton de télécommande 12 devra pouvoir communiquer, et d'autre part une adresse d'unité qui au contraire sera propre à l'unité fonctionnelle concrétisée par le bouton de télécommande 12 et le voyant 13 associé, et ne devra donc être attribuée à aucune autre unité fonctionnelle.

Par le mot "chaînage" on entend un processus permettant d'attribuer à une unité fonctionnelle donnée la même adresse de réseau qu'une autre unité fonctionnelle sans que l'opérateur ait à connaître cette adresse de réseau.

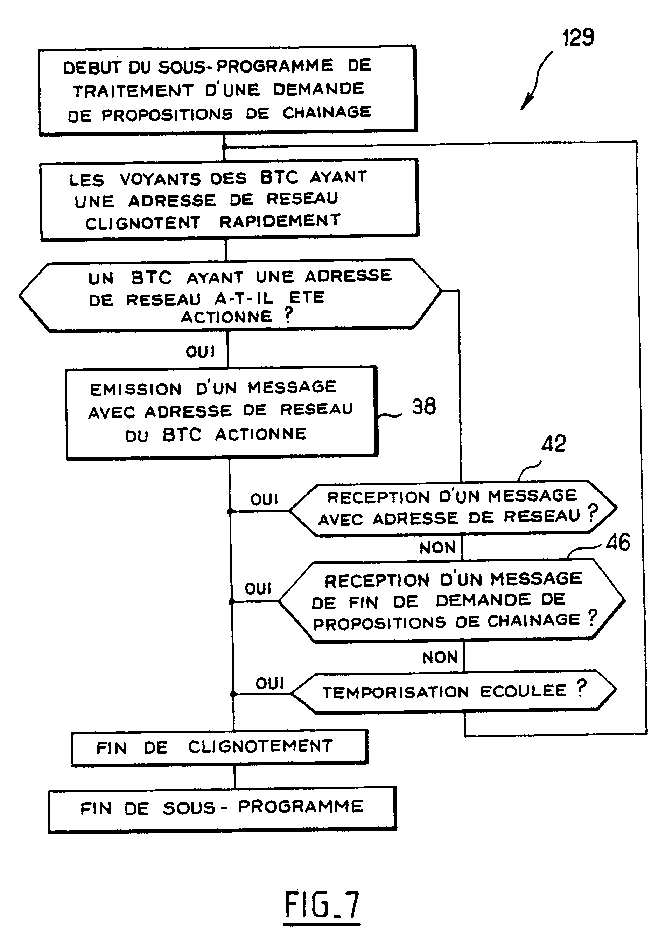

Le message de demande de propositions de chaînage émis selon l'étape 34 est reçu par les autres unités fonctionnelles de commande reliées à l'espace de communication (test 36 à la figure 4) et la demande de propositions de chaînage est traitée par le sous-programme 129 que l'on va décrire en référence à la figure 7.

Lorsqu'une unité fonctionnelle de commande reçoit un message de demande de propositions de chaînage, les voyants 13 des boutons de télécommande 12 ayant déjà une adresse de réseau se mettent à clignoter rapidement, par opposition au clignotement plus lent du voyant 13 associé au bouton de télécommande 12 ayant lancé la session de mise en correspondance.

Ce clignotement rapide incite l'opérateur à choisir en priorité, si cela lui convient, l'option consistant à actionner l'un des boutons de télécommande dont le voyant clignote rapidement. Si l'opérateur fait cela, l'unité fonctionnelle de télécommande dont le bouton vient d'être actionné émet (étape 38) un message avec l'adresse de réseau du bouton de télécommande qui a été actionné.

Revenant à la figure 4, ce message est détecté par le test 39 du bouton de télécommande ayant lancé la session de mise en correspondance. Il en résulte que le bouton de télécommande 12 ayant lancé la session de mise en correspondance adopte (étape 41) l'adresse de réseau reçue.

Au contraire, revenant à la figure 7, si dans une unité fonctionnelle d'action autre que celle ayant lancé la session, aucun bouton de télécommande n'est actionné, l'unité fonctionnelle attend la réception d'un message avec adresse de réseau (test 42). Un tel message peut provenir d'une troisième unité fonctionnelle dont un bouton de télécommande a été actionné pour provoquer un chaînage à partir de cette troisième unité fonctionnelle. S'il y a émission d'un message à partir de l'unité fonctionnelle considérée à la figure 7 ou d'un message d'une unité fonctionnelle similaire détecté par le test 42, l'unité fonctionnelle considérée à la figure 7 provoque la fin du clignotement des voyants lumineux, et cela termine l'exécution du sous-programme de traitement des demandes de propositions de chaînage.

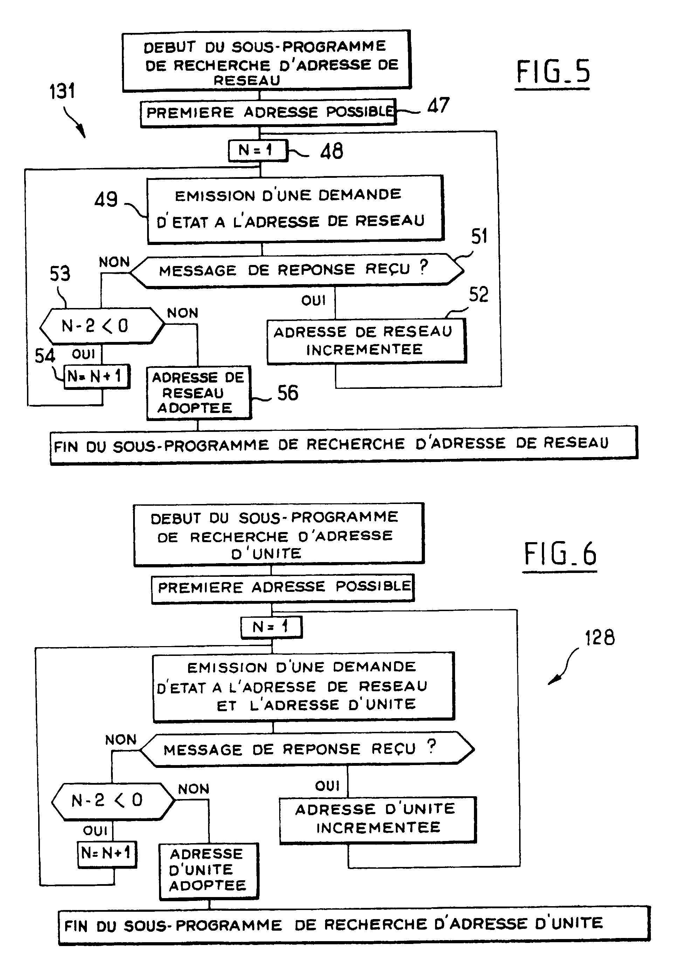

Mais il est également possible que l'opérateur désire réaliser non pas un chaînage mais au contraire un nouveau réseau indépendant de ceux qui existent déjà. Dans ce cas, l'opérateur, au lieu d'actionner un bouton de télécommande d'une unité fonctionnelle autre que celle ayant lancé la session, actionne une seconde fois le bouton de télécommande ayant lancé la session, et cela est détecté par la test 43 à la figure 4, et provoque l'émission (étape 44) d'un message de fin de demande de propositions de chaînage. Un tel message est détecté par le sous-programme 129 (figure 7) des autres unités fonctionnelles d'action (test 46), et provoque dans celles-ci également la fin du clignotement des voyants des autres unités fonctionnelles d'action et la fin d'exécution de leur sous-programme de traitement des demandes de propositions de chaînage. Dans l'unité fonctionnelle ayant lancé la session, l'étape 44 est suivie par l'exécution du sous-programme de recherche d'adresse de réseau 131, que l'on va décrire en référence à la figure 5.

Ce sous-programme explore un champ d'adresses de réseau possible. Au début, l'initialisation se fait sur une première adresse (étape 47), puis un nombre N est rendu égal à 1 (étape 48). Le nombre N permet de savoir si chaque adresse a été explorée une fois ou deux fois.

Ensuite, étape 49, le sous-programme provoque l'émission d'une demande d'état à l'adresse de réseau en train d'être explorée, et , étape 51, attend un éventuel message de réponse. Si une réponse est reçue, c'est que l'adresse de réseau n'est pas disponible et le programme incrémente l'adresse explorée, de manière à explorer ensuite l'adresse suivante (étape 52), puis N est de nouveau rendu égal à 1 (étape 48 déjà décrite) et l'émission d'une demande d'état recommence avec la nouvelle adresse et ainsi de suite.

Si au contraire aucun message de réponse n'est reçu suite à l'émission d'une demande d'état pour une adresse de réseau donnée, on détermine par le test 53 s'il s'agit de la première ou de la deuxième exploration de cette adresse. S'il ne s'agit que de la première exploration, N est rendu égal à 2 (étape 54) puis une nouvelle demande d'état avec la même adresse de réseau est faite.

Si au contraire N est égal à 2, autrement dit si l'adresse de réseau a été explorée deux fois sans obtenir de message de réponse, on considère que l'adresse est disponible et elle est adoptée, étape 56. Le sous-programme de recherche d'adresse de réseau est alors terminé.

L'unité fonctionnelle d'action passe alors au sous-programme de recherche d'adresse d'unité 128 que l'on va décrire en référence à la figure 6. Ce sous-programme est identique au sous-programme de recherche d'adresse de réseau, excepté que les demandes d'état comportent non seulement l'adresse d'unité que l'on veut tester, mais également l'adresse de réseau qui est maintenant connue. Il serait en effet sans inconvénient de choisir pour l'unité fonctionnelle d'action une adresse d'unité qui soit déjà affectée à une autre unité fonctionnelle appartenant à un réseau différent et ayant donc une adresse de réseau différente.

L'unité fonctionnelle de commande est maintenant complètement adressée et, (étape 57, figure 4), l'unité fonctionnelle ayant lancé la session émet un message de demande de mise en correspondance avec mention de l'adresse de réseau et mention éventuelle d'un critère restrictif, signifiant par exemple "lampes", pour que seuls les appareils d'éclairage réagissent au message de demande de mise en correspondance.

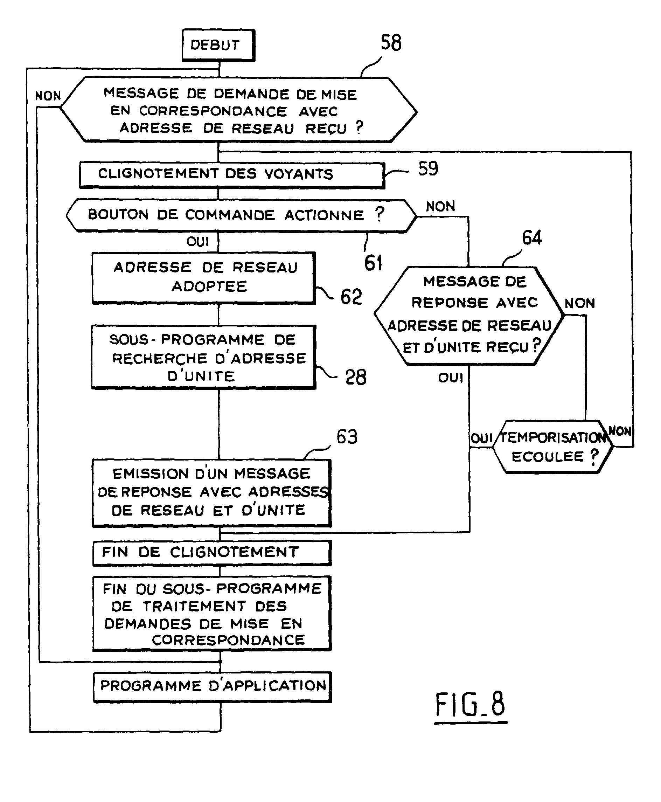

Le message de demande de mise en correspondance est reçu par les unités fonctionnelles d'action (test 58, figure 8) ayant la même adresse de réseau, et toutes les unités fonctionnelles d'action ayant acette même adresse de réseau et qui le cas échéant obéissent au critère restrictif font clignoter leur voyant lumineux (étape 59) pour inciter l'opérateur à les mettre en correspondance avec l'unité fonctionnelle d'action. L'opérateur peut le faire en actionnant n'importe quel bouton de commande de l'unité d'action, et cela sera détecté par le test 61, auquel cas l'unité fonctionnelle d'action, si elle n'a pas encore d'adresse de réseau, adopte l'adresse de réseau qui lui est communiquée par l'unité fonctionnelle de commande, étape 62.

Ensuite, l'unité fonctionnelle d'action lance son sous-programme de recherche d'adresse d'unité 28 qui est similaire au sous-programme de recherche d'adresse d'unité 128 décrit en référence à la figure 6, et qui ne sera donc pas décrit à nouveau.

De manière non représentée, si l'unité fonctionnelle d'action avait déjà une adresse de réseau et une adresse d'unité, elle compare son adresse de réseau avec celle envoyée par l'unité de commande. S'il n'y a pas identité, l'unité d'action adopte l'adresse de réseau envoyée par l'unité de commande et recherche une nouvelle adresse d'unité par le sous-programme 28. Si il y a identité, l'unité d'action commence la recherche d'adresse d'unité par l'adresse d'unité qu'elle avait déjà, pour vérifier si elle est toujours disponible. Ce n'est que dans la négative que le reste du champ d'adresses sera systématiquement exploré.

Ensuite, quel que soit le mode d'acquisition des adresses de l'unité fonctionnelle d'action, celle-ci émet un message de réponse comportant ses adresses de réseau et d'unité (étape 63) et fait cesser le clignotement de ses voyants.

Normalement, si l'opérateur n'actionne pas un bouton de commande de l'unité fonctionnelle d'action considérée à la figure 8, il va le faire sur une autre unité fonctionnelle d'action semblable à celle de la figure 8, et le message de réponse émis par cette autre unité fonctionnelle d'action est détecté par l'unité de la figure 8 au moyen du test 64, qui provoque là encore la fin du clignotement et la fin du sous-programme de traitement des demandes de mise en correspondance.

Le message de réponse avec adresse de réseau et d'unité est également détecté par un test 66 (figure 4) de l'unité fonctionnelle de commande, et l'adresse complète de l'unité d'action est mise en mémoire (étape 67), puis il est mis fin à la session de mise en correspondance (étape 68).

La fin de la session de mise en correspondance dans les unités fonctionnelles de commande et d'action provoque le retour de tous les boutons et voyants à leur fonction d'utilisation normale. Comme l'unité fonctionnelle de commande a mis en mémoire l'adresse de l'appareil d'action avec lequel elle a été mise en correspondance, l'actionnement du bouton de télécommande 12 pourra être utilisé par exemple pour mettre en marche et arrêter l'appareil d'action avec lequel le bouton de télécommande a été mis en correspondance.

Bien entendu, l'invention n'est pas limitée aux exemples décrits et représentés.

On pourrait commencer par désigner l'appareil d'action avec lequel on désire mettre le bouton de télécommande en correspondance, puis faire les recherches automatiques d'adresses ensuite.

Au lieu d'enregistrer l'adresse de l'unité d'action désignée dans la mémoire de l'unité de commande, on peut intégrer au message de demande de mise en correspondance émis par l'unité de commande une adresse dite "de sous-ensemble" que l'unité d'action désignée mettra en mémoire. Après la fin de mise en correspondance, l'unité d'action réagira à toute commande comportant cette adresse de sous-ensemble.

## Revendications

1. Procédé d'installation comprenant une séquence d'adressage d'une unité fonctionnelle dans un espace de communication bidirectionnelle reliant plusieurs telles unités fonctionnelles entre elles, caractérisé par les étapes suivantes, dans le cadre de ladite séquence d'adressage :
a) émission dans l'espace de communication (4), par l'unité fonctionnelle, d'un message d'interrogation (49) muni d'une première adresse choisie dans un champ d'adresses possibles ;
b) attente (51) par l'unité fonctionnelle d'une réponse à ce message d'interrogation, en provenance de l'espace de communication (4) ;
c) adoption de la première adresse par l'unité fonctionnelle en l'absence de réponse au message d'interrogation ;
d) en présence d'une réponse au message d'interrogation, réitération des étapes "a)" et "b)" par l'unité fonctionnelle en changeant l'adresse associée au message d'interrogation jusqu'à ce qu'un n^{ième} message d'interrogation, muni d'une n^{ième} adresse, reste sans réponse ;
e) adoption (56) de la n^{ième} adresse par l'unité fonctionnelle.

2. Procédé selon la revendication 1, caractérisé en ce que lors de l'étape de réitération, on change l'adresse par incrémentation (52).

3. Procédé selon la revendication 1 ou 2, caractérisé en ce qu'en l'absence de réponse à un message d'interrogation, il y a au moins une réémission du même message d'interrogation par l'unité fonctionnelle, avec la même adresse, et l'adresse n'est adoptée par l'unité fonctionnelle que si le dernier message d'interrogation émis reste sans réponse.

4. Procédé d'installation selon l'une des revendications 1 à 3, caractérisé en ce que pour la mise en correspondance de deux desdites unités fonctionnelles (1, 2, 3, 8, 9, 11) reliées entre elles par ledit espace de communication bidirectionnelle (4), les étapes suivantes sont conduites :
- désignation d'une unité fonctionnelle de commande et d'une unité fonctionnelle d'action par un opérateur ;
- exécution automatique (28) de ladite séquence d'adressage, appliquée à l'unité d'action ;
- émission par l'unité d'action, d'un message (63) incluant l'adresse de l'unité d'action ;
- enregistrement (67) de l'adresse envoyée par l'une des unités dans une mémoire non-volatile (23, 123) de l'autre unité.

5. Procédé selon la revendication 4, caractérisé en ce que l'adresse enregistrée est celle qui a été attribuée à l'unité d'action par ladite séquence d'adressage exécutée automatiquement (28).

6. Procédé selon la revendication 4, caractérisé en ce que l'adresse enregistrée est une adresse de sous-ensemble que l'unité d'action enregistre après l'avoir reçue par un message en provenance de l'unité de commande.

7. Procédé selon l'une des revendications 4 à 6, caractérisé en ce que l'étape de désignation se subdivise de la façon suivante :
- désignation d'une première des deux unités,
- émission par celle-ci d'un message de demande de désignation, avec un critère restrictif,
- manifestation sensorielle des autres unités obéissant au critère restrictif,
- désignation de la deuxième unité parmi celles qui se manifestent sensoriellement.

8. Procédé selon l'une des revendications 4 à 7, caractérisé en ce qu'avant l'exécution automatique de ladite séquence d'adressage appliquée à l'unité d'action, on teste si une adresse de réseau communiquée par l'unité de commande correspond à une adresse de réseau déjà enregistrée dans une mémoire de l'unité d'action, et, dans la négative, on adopte pour l'unité d'action l'adresse de réseau communiquée par l'unité de commande puis on procède à l'adressage automatique, alors que si les deux adresses de réseau sont identiques, on commence l'adressage automatique par une vérification de la disponibilité d'une adresse d'unité précédemment enregistrée par l'unité d'action.

9. Procédé selon l'une des revendications 4 à 7, caractérisé par les étapes suivantes :
- choix par l'opérateur entre donner à une première des unités de commande et d'action une adresse de réseau déjà attribuée à d'autres unités, pour que la première unité communique avec ces autres unités, ou exécuter automatiquement ladite séquence d'adressage (131) pour donner à la première unité une nouvelle adresse de réseau;
- communiquer (57) l'adresse de réseau de la première à la deuxième des deux unités pour que la deuxième unité prenne (62) comme adresse de réseau celle de la première unité ;
- exécution automatique (28) de ladite séquence d'adressage pour donner à l'unité d'action une adresse d'unité.

10. Procédé selon la revendication 9, caractérisé par les étapes suivantes pour donner à la première unité une adresse de réseau déjà attribuée à d'autres unités :
- lancement par la première unité d'une demande de propositions de chaînage (34) sur l'espace de communication bidirectionnelle (4) ;
- manifestation sensorielle des autres unités fonctionnelles ayant déjà une adresse de réseau ;
- désignation d'une telle unité fonctionnelle par l'opérateur ;
- envoi par cette unité fonctionnelle, dans l'espace de communication bidirectionnelle (4), d'un message (38) incluant son adresse de réseau ;
- réception (39) de ce message par la première unité fonctionnelle et adoption (41) par la première unité fonctionnelle de l'adresse de réseau reçue avec ledit message incluant l'adresse de réseau.

11. Procédé selon l'une des revendication 4 à 10, caractérisé par l'exécution automatique de ladite séquence d'adressage (128) pour donner à l'unité de commande une adresse d'unité.

12. Unité fonctionnelle comprenant un micro-contrôleur (18, 118) auquel sont reliés des moyens d'entrée/sortie (19, 119) et un moyen de transmission bidirectionnelle (24, 124) pour relier le micro-contrôleur à un espace de communication bidirectionnelle (4), caractérisée en ce que le micro-contrôleur est programmé de manière à contenir au moins une séquence d'adressage automatique ayant les étapes suivantes :
a) émission dans l'espace de communication (4), par l'unité fonctionnelle, d'un message d'interrogation (49) muni d'une première adresse choisie dans un champ d'adresses possibles ;
b) attente (51) par l'unité fonctionnelle d'une réponse à ce message d'interrogation, en provenance de l'espace de communication (4) ;
c) adoption de la première adresse par l'unité fonctionnelle en l'absence de réponse au message d'interrogation ;
d) en présence d'une réponse au message d'interrogation, réitération des étapes "a)" et "b)" par l'unité fonctionnelle en changeant l'adresse associée au message d'interrogation jusqu'à ce qu'un n^{ième} message d'interrogation, muni d'une n^{ième} adresse, reste sans réponse ;
e) adoption (56) de la n^{ième} adresse par l'unité fonctionnelle.

13. Unité fonctionnelle selon la revendication 12, caractérisée en ce que l'étape de réitération change l'adresse par incrémentation (52).

14. Unité fonctionnelle selon la revendication 12 ou 13, caractérisée en ce que le micro-contrôleur est programmé pour qu'en l'absence de réponse à un message d'interrogation, il y ait au moins une réémission du même message d'interrogation par l'unité fonctionnelle, avec la même adresse, et l'adresse n'est adoptée par l'unité fonctionnelle que si le dernier message d'interrogation émis reste sans réponse.

15. Unité fonctionnelle selon l'une des revendications 12 à 14, caractérisée en ce qu'elle comprend des moyens (129, 43) pour sélectionner entre l'adoption (41) d'une adresse de réseau déjà adoptée par au moins une autre unité fonctionnelle reliée au même espace de communication (4), et ladite séquence d'adressage automatique (131) pour déterminer une nouvelle adresse de réseau, et des moyens pour émettre dans l'espace de communication un message de demande de mise en correspondance (57) accompagné de l'adresse de réseau.

16. Unité fonctionnelle selon l'une des revendications 12 à 14, caractérisée en ce qu'elle comprend des moyens (58, 61, 28, 63) pour recevoir un message de demande de mise en correspondance accompagné d'une adresse de réseau, attendre une désignation par un opérateur, et réagir à la désignation par exécution de ladite séquence d'adressage automatique pour déterminer une adresse d'unité disponible, adoption comme adresse d'unité de l'adresse d'unité disponible ainsi déterminée et émission d'un message de réponse à la demande de désignation accompagné de l'adresse d'unité adoptée.

17. Installation comprenant des unités fonctionnelles (1, 2, 3) selon l'une des revendications 12 à 16, les moyens d'entrée/sortie de ces unités fonctionnelles étant raccordés à un espace de communication bidirectionnelle (4) qui relie les unités fonctionnelles entre elles.

## Patentansprüche

1. Installationsverfahren, umfassend eine Schrittfolge zum Adressieren einer Funktionseinheit in einem bidirektionalen Kommunikationsraum, der mehrere solcher Funktionseinheiten miteinander verbindet, gekennzeichnet durch die folgenden Schritte, im Rahmen der genannten Adressierungs-Folge:
a) Aussenden einer mit einer ersten, aus einem möglichen Adressenbereich ausgewählten ersten Adresse versehenen Abfrage (49) von der Funktionseinheit in den Kommunikationsraum (4);
b) Warten (51) der Funktionseinheit auf eine Antwort des Kommunikationsraumes (4) auf diese Abfrage;
c) Annahme der ersten Adresse durch die Funktionseinheit bei Ausbleiben einer Antwort auf die Abfrage;
d) bei Eintreffen einer Antwort auf die Abfrage Wiederholung der Schritte "a)" und "b)" durch die Funktionseinheit, wobei die mit der Abfrage verbundene Adresse verändert wird, bis eine n-te Abfrage, versehen mit einer n-ten Adresse, ohne Antwort bleibt;
e) Annahme (56) der n-ten Adresse durch die Funktionseinheit.

2. Verfahren nach Anspruch, dadurch gekennzeichnet, daß bei jedem Wiederholungsschritt die Adresse durch Erhöhen eines Zählers (52) erhöht wird.

3. Verfahren nach Anspruch 1 oder 2, dadurch gekennzeichnet, daß bei Ausbleiben einer Antwort auf die Abfrage von der Funktionseinheit dieselbe Abfrage zumindest ein weiteres Mal mit derselben Adresse ausgesandt wird, und daß die Adresse durch die Funktionseinheit nur dann angenommen wird, wenn die letzte ausgesandte Abfrage ohne Antwort bleibt.

4. Installationsverfahren nach einem der Ansprüche 1 bis 3, dadurch gekennzeichnet, daß zum Herstellen einer Verbindung zwischen zweien der genannten Funktionseinheiten (1, 2, 3, 8, 9, 11), die untereinander durch den genannten bidirektionalen Kommunikationsraum (4) miteinander verbunden sind, die folgenden Schritte ausgeführt werden:
- Festlegen einer Befehls-Funktionseinheit (Master) und einer ausführenden Funktionseinheit (Slave) durch einen Betreiber;
- automatisches Ausführen (28) der beschriebenen Adressierungs-Folge, angewandt auf die ausführende Einheit;
- Aussenden einer Nachricht (63) unter Einschluß der Adresse der ausführenden Einheit durch die ausführende Einheit;
- Aufzeichnen (67) der ausgesandten Adresse durch eine der Einheiten in einem nicht flüchtigen Speicher (23, 123) der anderen Einheit.

5. Verfahren nach Anspruch 4, dadurch gekennzeichnet, daß die gespeicherte Adresse diejenige ist, die der ausführenden Einheit durch die beschriebene, automatisch ausgeführte Adressierungs-Folge (28) zugewiesen worden ist.

6. Verfahren nach Anspruch 4, dadurch gekennzeichnet, daß die gespeicherte Adresse eine Teiladresse ist, die die ausführende Einheit speichert, nachdem sie sie über eine von der Befehls-Einheit ausgesandte Nachricht empfangen hat.

7. Verfahren nach einem der Ansprüche 4 bis 6, dadurch gekennzeichnet, daß sich der Zuweisungsschritt wie folgt unterteilt:
- Bezeichnen einer der beiden Einheiten als erster Einheit,
- Aussenden einer Anforderung für eine Kennzeichnung, mit einem beschränkenden Unterscheidungsmerkmal, durch diese Einheit,
- sensorische Offenbarung von anderen Einheiten, die dem beschränkenden Unterscheidungsmerkmal genügen,
- Kennzeichnung der zweiten Einheit unter denjenigen Einheiten, die sich sensoriell offenbaren.

8. Verfahren nach einem der Ansprüche 4 bis 7, dadurch gekennzeichnet, daß man vor der automatischen Ausführung der genannten, auf die ausführende Funktionseinheit angewandten Adressierungs-Folge testet, ob eine Netzadresse, die durch die Befehlseinheit übermittelt wird, einer Netzadresse entspricht, die bereits in einem Speicher der ausführenden Einheit gespeichert ist, und daß man verneinendenfalls für die ausführende Einheit die durch die Befehlseinheit übermittelte Netzadresse annimmt und dann mit der automatischen Adressierung fortfährt, während man, wenn die beiden Netzadressen identisch sind, mit der automatischen Adressierung beginnt durch eine Bestätigung der Verfügbarkeit einer zuvor von der ausführenden Einheit gespeicherten Adresse einer Einheit.

9. Verfahren nach einem der Ansprüche 4 bis 7, gekennzeichnet durch die folgenden Schritte:
- Wahl des Betreibers zwischen der Möglichkeit, einer ersten der Befehlseinheiten und ausführenden Einheiten eine Netzadresse zu geben, die bereits anderen Einheiten zugewiesen ist, damit die erste Einheit mit den anderen Einheiten kommuniziert, und der Möglichkeit, die beschriebene Adressierungs-Folge (131) automatisch auszuführen, um der ersten Einheit eine neue Netzadresse zu geben;
- Übermitteln (57) der Netzadresse der ersten an die zweite der beiden Einheiten, so daß die zweite Einheit als Netzadresse die der ersten Einheit annimmt (62);
- automatische Ausführung (28) der beschriebenen Adressierungs-Folge, um der ausführenden Einheit eine Einheits-Adresse zu geben.

10. Verfahren nach Anspruch 9, gekennzeichnet durch die folgenden Schritte, um der ersten Einheit eine Netzadresse zu geben, die bereits anderen Einheiten zugewiesen ist:
- Absenden einer Anfrage mit Verknüpfungsvorschlägen (34) durch die erste Einheit in den bidirektionalen Kommunikationsraum (4);
- sensorielle Offenbarung der anderen Funktionseinheiten, die bereits eine Netzadresse haben;
- Kennzeichnen einer solchen Funktionseinheit durch den Betreiber;
- Aussenden einer Nachricht (38) mit ihrer Netzadresse durch diese Funktionseinheit in den bidirektionalen Kommunikationsraum (4);
- Empfang (39) dieser Nachricht durch die erste Funktionseinheit und Annahme (41) dieser mit der genannten, die Netzadresse enthaltenen Nachricht empfangenen Netzadresse durch die erste Funktionseinheit.

11. Verfahren nach einem der Ansprüche 4 bis 10, gekennzeichnet durch automatische Ausführung der beschriebenen Adressierungs-Folge (128), um der Befehlseinheit eine Einheits-Adresse zu geben.

12. Funktionseinheit mit einem Mikroprozessor (18, 118), mit dem Eingabe-/Ausgabemittel (19, 119) verbunden sind und ein bidirektionales Übertragungsmittel (24, 124) zum Verbinden des Mikroprozessors mit einem bidirektionalen Kommunikationsraum (4), dadurch gekennzeichnet, daß der Mikroprozessor mit zumindest einer automatischen Adressierungs-Folge programmiert ist, die die folgenden Schritte aufweist:
a) Aussenden einer mit einer ersten, aus einem möglichen Adressenbereich ausgewählten ersten Adresse versehenen Abfrage (49) von der Funktionseinheit in den Kommunikationsraum (4);
b) Warten (51) der Funktionseinheit auf eine Antwort des Kommunikationsraumes (4) auf diese Abfrage;
c) Annahme der ersten Adresse durch die Funktionseinheit bei Ausbleiben einer Antwort auf die Abfrage;
d) bei Eintreffen einer Antwort auf die Abfrage Wiederholung der Schritte "a)" und "b)" durch die Funktionseinheit, wobei die mit der Abfrage verbundene Adresse verändert wird, bis eine n-te Abfrage, versehen mit einer n-ten Adresse, ohne Antwort bleibt;
e) Annahme (56) der n-ten Adresse durch die Funktionseinheit.

13. Funktionseinheit nach Anspruch 12, dadurch gekennzeichnet, daß während eines Wiederholungsschritts die Adresse durch schrittweises Hochzählen (52) verändert wird.

14. Funktionseinheit nach einem der Ansprüche 12 oder 13, dadurch gekennzeichnet, daß der Mikroprozessor programmiert ist, um bei Ausbleiben einer Antwort auf eine Anfragenachricht zumindest eine Wiederholung derselben Abfrage mit derselben Adresse durch die Funktionseinheit auszusenden und daß die Adresse durch die Funktionseinheit nur angenommen wird, wenn auch die letzte, ausgesandte Abfrage ohne Antwort bleibt.

15. Funktionseinheit nach einem der Ansprüche 12 bis 14, dadurch gekennzeichnet, daß sie Mittel (129, 43) aufweist, um zwischen der Annahme (41) einer Netzadresse zu unterscheiden, die bereits von zumindest einer anderen, mittels desselben Kommunikationsraumes (4) angeschlossenen Funktionseinheit angenommen worden ist, und der automatischen Adressierungs-Folge (131), um eine neue Netzadresse zu bestimmen; und weiter Mittel zum Aussenden einer Verknüpfungsaufforderung (57) in den Kommunikationsraum, begleitet von der Netzadresse.

16. Funktionseinheit nach einem der Ansprüche 12 bis 14, dadurch gekennzeichnet, daß sie Mittel (58, 61, 28, 63) zum Empfangen einer Aufforderung zum Vermitteln, begleitet von einer Netzadresse, aufweist, zum Annehmen einer Bestimmung durch den Betreiber, und zum Reagieren auf die Bestimmung durch Ausführen der beschriebenen automatischen Adressierungs-Folge, um eine verfügbare Einheits-Adresse zu bestimmen, zur Annahme der so bestimmten verfügbaren Einheits-Adresse als Einheitsadresse und zum Aussenden einer Antwortnachricht auf die Bestimmungsanfrage, begleitet von der angenommenen Einheitsadresse.

17. Anlage mit Funktionseinheiten (1, 2, 3) gemäß einem der Ansprüche 12 bis 16, wobei die Eingabe-/Ausgabemittel der Funktionseinheiten mit einem bidirektionalen Kommunikationsraum (4) verbunden sind, der seinerseits die Funktionseinheiten untereinander verbindet.

## Claims

1. Installation process comprising a stage for addressing a functional unit within a bidirectional communication space connecting several such functional units together, characterized by the following stages within said addressing stage :
a) transmission in the communication space (4), by the functional unit, of an interrogation message (49) provided with a first address chosen from the field of possible addresses;
b) waiting (51) by the functional unit for an answer to this interrogation message originating from the communication space (4) ;
c) adoption of the first address by the functional unit in the absence of an answer to the interrogation message;
d) in the presence of an answer to the interrogation message, repeat of stages "a)" and "b)" by the functional unit changing the address associated with the interrogation message until the n^{th} interrogation message, provided with an n^{th} address, remains unanswered;
e) adoption (56) of the n^{th} address by the functional unit.

2. Process according to claim 1, characterized in that during the reiteration stage the address is changed by increments (52).

3. Process according to claim 1 or 2, characterized in that in the absence of an answer to an interrogation message, there is at least one retransmission of the same interrogation message by the functional unit, with the same address, and the address is only adopted by the functional unit if the last interrogation message transmitted remains unanswered.

4. Installation process according to one of claims 1 to 3, characterized in that, for matching two of said functional units (1, 2, 3, 8, 9, 11) connected together via a bidirectional communication space (4), following stages are carried out :
- designation by an operator of a control functional unit and a working functional unit;
- automatic addressing (28) of the working unit;
- transmission by the working unit of a message (63) which includes the address of the working unit;
- storage (67) of the address sent by one of the working units in the non-volatile memory (23, 123) of the other unit.

5. Process according to claim 4, characterized in that the stored address is that which has been allocated to the working unit by automatic addressing (28).

6. Process according to claim 4, characterized in that the stored address is a subset address which the working unit stores after having received a message originating from the control unit.

7. Process according to one of claims 4 to 6, characterized in that the designation stage is divided in the following fashion :
- designation of the first of two units,
- transmission of a designation request message, with a restrictive criterion, by the first of the two units,
- other units which satisfy the restrictive criterion make their presence known via the sensors.

8. Process according to one of claims 4 to 7, characterized in that before the automatic addressing stage, a test is carried out to see if a network address communicated by the control unit corresponds to a network address which is already stored in the memory of the working unit and, if the result is negative, the network address communicated by the control unit is adopted for the working unit then automatic addressing proceeds, while if the two network addresses are identical, automatic addressing is started with a check on the availability of a unit address previously stored by the working unit.

9. Process for matching according to one of claims 4 to 7, characterized by the following stages :
- choice by the user between giving a network address which is already allocated to the first of the control and working units, so that the first units communicates with the other units, or to initiate an automatic addressing process (131) according to one of claims 1 to 3 in order to give the first unit a new network address;
- communicating (57) the network address of the first unit to the second of the two units so that the second unit takes as its network address that of the first unit;
- automatic addressing (28) of the working unit in order to give a unit address to the working unit.

10. Process for matching according to claim 9, characterized by the following stages in order to give a network address which is already allocated to other units to the first unit :
- initiation by the first unit of a chaining proposal request (34) via the bidirectional communication space (4);
- other functional units already possessing a network address make their presence known via the sensors;
- designation of such a functional unit by the operator;
- this functional unit sends a message (38) including its network address via the bidirectional communication space (4);
- reception (39) of this message by the first functional unit and adoption (41) of the network address received with said message including the network address, by the first functional unit.

11. Process for matching according to one of claims 4 to 10, characterized by an automatic addressing stage (128) in order to give a unit address to the control unit.

12. Functional unit containing a microcontroller (18, 118) to which input/output means (19, 119) and a bidirectional transmission means (24, 124) are linked in order to connect the microcontroller to a bidirectional communication space (4), characterized in that the microcontroller is programmed so as to contain at least one automatic addressing sequence comprising the following stages:
a) transmission in the communication space (4), by the functional unit, of an interrogation message (49) provided with a first address chosen from the field of possible addresses;
b) waiting (51) by the functional unit for an answer to this interrogation message originating from the communication space (4) ;
c) adoption of the first address by the functional unit in the absence of an answer to the interrogation message;
d) in the presence of an answer to the interrogation message, repeat of stages "a)" and "b)" by the functional unit changing the address associated with the interrogation message until the n^{th} interrogation message, provided with an n^{th} address, remains unanswered;
e) adoption (56) of the n^{th} address by the functional unit.

13. Functional unit according to claim 12, characterized in that the reiteration stage changes the address by increments (52).

14. Functional unit according to claim 12 or 13, characterized in that the microcontroller is programmed in such a way that in the absence of an answer to an interrogation message, there is at least one retransmission of the same interrogation message by the functional unit, with the same address, and the address is only adopted by the functional unit if the last interrogation message transmitted remains unanswered.

15. Functional unit according to one of the claims 12 to 14, characterized in that it contains means (129, 43) to select between adoption (41) of a network address which is already adopted by at least one other functional unit connected to the same communication space (4), and an automatic addressing subprogram (131) for determining a new network address, and means of transmitting a message requesting matching (57) over the communication space accompanied by the network address.

16. Functional unit according to one of claims 12 to 14 characterized in that it contains means (58, 61, 28, 63) for receiving a message requesting matching accompanied by a network address, waiting for a designation by the operator, and responding to the designation by automatic addressing in order to determine an available unit address, adoption as a unit address of the available unit address thus determined and transmission of an answer message to the designation request accompanied by the adopted unit address.

17. Installation comprising functional units (1, 2, 3) according to one of claims 12 to 16, said input/output means of these functional units being connected to a bidirectional communication space (4) that connects together said functional units, connected via a bidirectional communication space (4).
